# EUROPEAN PATENT APPLICATION

(11) **EP 4 527 637 A1**
(43) Date of publication of application: **26.03.2025**
(21) Application number: 23306587.9
(22) Date of filing: 22.09.2023
(51) Int. Cl.: B60C 1/00, C08K 5/09, C08K 3/04

(54) **RUBBER COMPOSITION COMPRISING DATE SEED OIL AS BIO-SOURCED PLASTICIZER**

(71) Applicant: TOTALENERGIES ONETECH, 92400 Courbevoie (FR)
(72) Inventor: CHATTERJEE, Victor Avisek, 700009 Kolkata (IN); PERUMALSAMY, Jayachandran, 609307 Porayar (IN)
(74) Representative: Cabinet Nony

(57) **Abstract**

The invention relates to a rubber composition for tire applications comprising at least one rubber polymer, and at least date seed oil.

It also relates to a tire tread comprising the rubber composition and to a tire comprising said tire tread.

It further relates to the use of date seed oil to plasticize at least one rubber polymer.

## Description

### TECHNICAL FIELD

The present invention relates to new plasticizers produced from raw materials from renewable sources, in particular to bio-sourced plasticizers. It also relates to the use of plasticizer in formulations of cross-linkable or cross-linked rubber compositions for tires, in particular for tires treads.

### BACKGROUND ART

The tire industry uses synthetic rubber, produced from petroleum-derived hydrocarbons (about 60% of the rubber used in the tire industry), as well as natural rubber (about 40% of the rubber used in the tire industry). Natural rubber allows to reach a lower internal heat generation in tires compared to synthetic rubber, whilst offering high mechanical resistance. With regard to its properties, natural rubber is used in many portions of the tires, mainly for truck and earthmover tire treads.

Plasticizers, also known as Rubber Process Oils, are used as processing aid for the processing of raw rubbers. Generally, the plasticizers are used to improve the viscoelastic properties of the rubber composition. In particular, the plasticizers allow to affect the elastic modulus E' (also named storage modulus) as well as the viscous modulus E" (also named loss modulus) of rubber compositions for tire, and consequently, to improve the ratio between E" and E' (named tan δ). In fact, in tire and moreover in tire tread application the determination of the dynamic properties of a rubber compound (*i.e*. the determination of E', E" and tan δ) in a wide temperature range (applying the time-temperature superposition principle, well known to the experts in the art) allows to predict the behavior of the said rubber compound in terms of winter performances, wet and dry traction and rolling resistance.

In the case of the manufacture of tires, the proportion of plasticizers to be used depends on the portion of the tire being manufactured. For example, in the case of tire tread formulations, the proportion of plasticizer that is used along with the raw rubber and other additives is about 12- 20 parts per hundred (PHR).

Petroleum-based plasticizers are currently used in rubber compounding for tire applications, among which aromatic plasticizers such as DAE (Distillate Aromatic Extract), MES (Mild Extract Solvate), TDAE (Treated Distillate Aromatic Extract) products, RAE (Residual Aromatic Extract); naphthenic plasticizers such as naphthenic oils; and paraffinic plasticizers. Most of these plasticizers are derived from the heavier fractions from the distillation of crude oil.

The type of plasticizers to be used depends on the type of rubber being processed. For natural rubber and styrene-butadiene rubbers, aromatic plasticizers such as RAE are mainly used due to their better compatibility with these types of rubbers. However, aromatic plasticizers come under REACH regulations as they contain polyaromatic hydrocarbons, sometimes at concentrations which may be considered carcinogenic. Moreover, they are derived from crude oil and their properties of biodegradability are not satisfying.

Nowadays, industrials try to reduce the content of petroleum-based products in rubber formulations. In particular, industrials are looking for alternative sources for rubber plasticizers which are more carbon neutral, biodegradable, and do not contain potent carcinogens. However, reducing the content of petroleum-based products should not lead to a fundamental loss of performances.

Some vegetable oils have been previously proposed but there is a competition with the food demand.

For instance, EP 3251872 A1 discloses a rubber composition comprising a diene-based elastomer, a fatty acid monoester, a petroleum-derived oil and silica.

WO2011/130525 discloses a rubber composition comprising a rubber compound and a processing oil, wherein the processing oil comprises a modified tall oil pitch.

WO2020/128007 discloses a rubber composition comprising rubber polymers and at least one acid derived from renewable sources or at least one ester derived from renewable sources.

In this context, there is a need for rubber compositions for tire application in general and tire tread application in particular, comprising effective plasticizers having a reduced content of petroleum-based oils, or even being free of petroleum-based oils, that are easily available and with satisfying performances.

In particular, there is a need for bio-sourced plasticizers, in particular fully bio-sourced plasticizers.

There is also a need for rubber compositions for tire application wherein the traditional petroleum-based plasticizers, in particular aromatic plasticizers like the treated distillate aromatic extract (T-DAE) and the Residual Aromatic Extract (RAE) are mostly or even completely replaced by an efficient product from renewable source, in particular by an efficient bio-sourced product.

The present invention aims precisely to meet these needs.

### SUMMARY OF THE INVENTION

Unexpectedly and advantageously, the inventors have found that these objectives can be achieved by using date seed oil as plasticizer.

Thus, the present invention relates to a rubber composition for tire applications comprising:
- at least one rubber polymer, and
- at least date seed oil.

The date seed oil is present in the composition as plasticizer. Advantageously, the rubber composition according to the invention comprises date seed oil as the only plasticizer.

Unexpectedly, the inventors have found that date seed oil can fully replace aromatic plasticizers such as RAE for rubber manufacturing.

As shown in the examples, a rubber composition according to the invention comprising date seed oil as plasticizer has at least similar rheometric properties, Mooney viscosity and Scorch time compared to rubber compositions comprising RAE as plasticizer, and is an excellent aid in filler dispersion into the rubber composition. It also shows a lower Payne effect, and thus improved fuel economy performance and safety performance, as well as better wet and dry traction and lower rolling resistance, compared to rubber compositions comprising RAE as plasticizer. Moreover, a better plasticization of vulcanized rubber is shown with date seed oil. It is also observed that the viscosity of date seed oil is very much lower than RAE and hence transportation of date seed oil does not require special iso-tanks as required for the transportation of RAE. Thus, date seed oil allows to reach properties at least as good as, or even better than RAE as a rubber process oil for the compounding of natural rubber.

Furthermore, as shown in the examples, date seed oil allows also to reach properties at least as good as other bio-sourced or partially bio-sourced plasticizers.

Date seed oil can be used as a fully bio-sourced plasticizer. Date seed oil is particularly advantageous as it is biodegradable, devoid of carcinogens such as polyaromatic hydrocarbons, and is a completely bio-sourced product. Furthermore, date seed oil comes from a non-edible part of a fruit. Thus, the use of date seed oil as plasticizer allows to reduce the overall carbon footprint of a rubber composition.

Thus, the invention also relates to the use of date seed oil to plasticize at least one rubber polymer, in particular to plasticize natural rubber.

The invention also relates to the use of the rubber composition according to the invention for tire applications.

The invention is also directed to a tire tread comprising the rubber composition according to the invention.

The invention is also directed to a tire comprising a tire tread according to the invention.

In the continuation of the text, the expressions "between ... and ...", "ranging from ... to ... ", "varying from ... to ... ", and "from ... to ..." are equivalent and are intended to mean that the limits are included, unless otherwise mentioned.

### DEFINITIONS

The unit "PHR", or "Parts per Hundred of Rubber polymer" is used to quantify the amount of various ingredients present in a rubber composition, designating the number of parts by weight of each ingredient per hundred parts by weight of rubber.

### DETAILED DESCRIPTION OF THE INVENTION

The present invention concerns a rubber composition for tire applications comprising at least one rubber polymer and at least date seed oil, and the use of date seed oil to plasticize at least one rubber polymer.

### Date seed oil

The date seed oil is a bio-sourced oil derived from the seeds of dates, in particular extracted from the seeds of dates, which are in particular available in tropical countries. The date seed oil is advantageously a vegetable-based oil extracted from a non-edible part of a fruit. For the purpose of the invention, a "bio-sourced" compound (for instance an oil) is derived partially or entirely from biomass, or obtained from renewable raw materials derived from biomass, preferably derived entirely from biomass, in particular from plants.

According to a preferred embodiment, the date seed oil is a bio-sourced plasticizer oil, preferably a fully bio-sourced plasticizer oil, and is inherently biodegradable.

In particular, the date seed oil used according to the invention can comprise at least one fatty acid selected from the group consisting of oleic acid (C₁₈H₃₄O₂) (C18: 1), lauric acid (C₁₂H₂₄O₂) (C12:0), palmitic acid (C₁₆H₃₂O₂) (C16:0), myristic acid (C₁₄H₂₈O₂) (C14:0), linoleic acid (C₁₈H₃₂O₂) (C18:2), stearic acid (C₁₈H₃₆O₂) (C18:0), and mixtures thereof.

Preferably, the date seed oil used according to the invention comprises a mixture of fatty acids. Preferably, the date seed oil used according to the invention comprises oleic acid (C18:1), lauric acid (C12:0), palmitic acid (C16:0), myristic acid (C14:0), linoleic acid (C18:2), stearic acid (C18:0), and mixtures thereof.

The date seed oil can comprise, relative to the total weight of the fatty acids in said date seed oil, from 26.3% to 52.2% by weight, preferably from 40% to 50% by weight, even more preferably from 41.3% to 47.7% by weight, and preferentially from 42% to 45% by weight, and preferably 42.6% by weight, of oleic acid.

The date seed oil can comprise, relative to the total weight of the fatty acids in said date seed oil, from 5.8% to 34.2% by weight, preferably from 10% to 20% by weight, more preferably from 10.2% to 17.8% by weight, and even more preferably from 12% to 17% by weight, and preferably 16.2% by weight, of lauric acid.

The date seed oil can comprise, relative to the total weight of the fatty acids in said date seed oil, from 7.0% to 15.1% by weight, preferably from 7.0% to 9.8% by weight, and more preferably from 7% to 8% by weight, and even more preferably 7.4% by weight, of palmitic acid.

The date seed oil can comprise, relative to the total weight of the fatty acids in said date seed oil, from 3.1% to 15.7% by weight, preferably from 5% to 10% by weight, and more preferably from 6.5% to 11.0% by weight, and even more preferably 6.5% by weight, of myristic acid.

The date seed oil can comprise, relative to the total weight of the fatty acids in said date seed oil, from 0.3% to 21.0% by weight, preferably from 9.2% to 19.2% by weight, and more preferably from 10% to 15% by weight, and even more preferably 12.7% by weight, of linoleic acid.

The date seed oil can comprise, relative to the total weight of the fatty acids in said date seed oil, from 1.7% to 5.7% by weight, preferably from 2.8% to 3.9% by weight, and more preferably from 3% to 3.5% by weight, and even more preferably 3.2% by weight, of stearic acid.

In a preferred embodiment, the date seed oil comprises, relative to the total weight of the fatty acids in said date seed oil, from 42% to 45% by weight of oleic acid, from 12% to 17% by weight of lauric acid, from 7% to 8% by weight of palmitic acid, from 6.5% to 11.0% by weight of myristic acid, from 10% to 15% by weight of linoleic acid and from 3% to 3.5% by weight of stearic acid, in particular 42.6% by weight of oleic acid, 16.2% by weight of lauric acid, 7.4% by weight of palmitic acid, 6.5% by weight of myristic acid, 12.7% by weight of linoleic acid and 3.2% by weight of stearic acid.

In particular, the date seed oil has a flash point from 140°C to 300°C, preferably from 250°C to 320°C, more preferably from 280°C to 315°C. According to a preferred embodiment, the flash point of said date seed oil is 312°C. These ranges of flash point entails safety while handling. The flash point of an oil can be measured according to ASTM 93 standard.

In particular, the date seed oil has a pour point from -10°C to 10°C, preferably from 0°C to 10°C. According to a preferred embodiment, the pour point of the date seed oil is 9°C. The pour point of an oil can be measured according to ASTM D97 standard.

In particular, the date seed oil has a boiling point from 396°C to 637°C. The boiling point of an oil can be measured according to ASTM D86 or D2887 standard.

In particular, the date seed oil is inherently biodegradable. The biodegradability of an oil can be measured by the OECD 301B standard test. Preferably, the biodegradability at 28 days of the date seed oil according to the invention is of at least 58% at 28 days as measured according to the OECD 301B standard, in particular from 58% to 60% at 28 days, more particularly of 58.13% at 28 days.

In particular, the date seed oil can have a kinematic viscosity at 40°C from 25 mm²/s to 41.6 mm²/s, preferably from 30 mm²/s to 40 mm²/s. According to a preferred embodiment, said kinematic viscosity at 40°C is 35.2 mm²/s. The kinematic viscosity at 40°C of date seed oil can be measured according to ASTMD445 standard.

In particular, the date seed oil comprises less than 1% by weight, in particular less than 0,1% by weight of water, relative to the total weight of date seed oil. Preferably, the date seed oil can be completely devoid of water in order to prevent any microbial growth. The date seed oil is also preferably devoid of any sort of odor.

In particular, the date seed oil has a sulfur content of less than 10 ppm. The sulfur content can be measured according to ASTM D4294 standard.

In particular, the date seed oil can comprise less than 0.5% by weight, in particular less than 0.1% by weight, more particularly less than 0.01% by weight of any surfactant(s) relative to the total weight of the date seed oil. Preferably, the date seed oil is devoid of any surfactant(s).

Preferably, the date seed oil is free from toxic chemicals and pesticides.

Date seed oil can be used to plasticize rubber polymer(s), in particular natural rubber, in particular for tire tread formulations, at a content from 1 to 80 PHR, in particular from 5 to 60 PHR, more particularly from 10 to 40 PHR, notably from 12 to 20 PHR.

### Rubber polymer

The rubber polymer can be selected from optionally functionalized styrene-butadiene rubber (SBR), polybutadiene rubber (BR), natural rubber (NR), polyisoprene rubber (IR), ethylene-propylene-diene monomer rubber (EPDM), polybutadiene (PB), nitrile butadiene rubber (NBR), polychloroprene rubber, butyl rubber, silicone rubber, and mixtures thereof.

In particular, the rubber polymer can be selected from optionally functionalized styrene-butadiene rubber (SBR), polybutadiene rubber (BR), natural rubber (NR), polyisoprene rubber (IR) and mixtures thereof.

According to a preferred embodiment, the rubber polymer can be selected from optionally functionalized styrene-butadiene rubber (SBR), natural rubber (NR) and mixtures thereof.

Generally, natural rubber is obtained from plants, for instance *Hevea* trees (*Hevea brasiliensis*)*,* Guayule shrubs (*Parthenium argentatum*) or Rubber plants (*Ficus elastica*), among others. In particular, the natural rubber can be cis-1,4-polyisoprene SIR-10 - Standard Indonesian Rubber grade 10.

As shown in the examples, date seed oil shows an excellent compatibility with natural rubber and provides an excellent plasticization effect for the compounding of natural rubber.

According to a preferred embodiment, the rubber polymer comprises at least natural rubber (NR), in particular more that 50% by weight, more particularly more that 80% by weight, notably more that 95% by weight, for instance more than 98% by weight of natural rubber, relative to the total weight of the rubber polymer. For instance, the rubber polymer consists of natural rubber.

In particular, the rubber composition comprises less than 20% by weight, in particular less than 5% by weight, for instance less than 2% by weight of a polymer rubber different from natural rubber, with regard to the total weight of natural rubber. For instance, the rubber composition is devoid of a rubber polymer other than natural rubber.

In particular, the rubber composition can comprise as rubber polymer(s) at least one styrene-butadiene rubber (SBR) and at least one rubber selected from polybutadiene rubber (BR), natural rubber (NR), polyisoprene rubber (IR) and mixtures thereof, in particular natural rubber.

According to a particular embodiment, the rubber polymers can further comprise nitrile rubbers and/or butyl rubbers and/or ethylene/propylene/diene polymer (EPDM) and/or neoprene (polychloroprene).

According to another embodiment, the rubber polymers can consist in SBR and one or more rubber selected from BR, NR, IR and mixtures thereof, in particular NR. In other word, according to a preferred embodiment, the rubber polymers do not comprise rubber that are different from SBR, BR, NR, or IR, in particular different from SBR and NR.

According to an embodiment, the rubber polymers can comprise styrene-butadiene rubber (SBR) and polybutadiene rubber (BR).

According to an embodiment, the rubber polymers can comprise styrene-butadiene rubber (SBR), polybutadiene rubber (BR) and natural rubber (NR).

According to an embodiment, the rubber polymers can comprise at least 20% by weight, preferably at least 30% by weight, more preferably at least 40% by weight of styrene-butadiene rubber, based on the total weight of the rubber polymers.

According to an embodiment, the rubber polymers can comprise:
- from 20 to 90% by weight of optionally functionalized styrene-butadiene rubber(s) and
- from 10 to 80% by weight of at least one rubber selected from polybutadiene rubber (BR), natural rubber (NR), polyisoprene rubber (IR) and mixtures thereof, in particular natural rubber,
based on the total weight of the rubber polymers.

According to an embodiment, the rubber polymers can consist in:
- from 20 to 90% by weight of optionally functionalized styrene-butadiene rubber(s) and
- from 10 to 80% by weight of one or more rubbers selected from polybutadiene rubber (BR), natural rubber (NR), polyisoprene rubber (IR) and mixtures thereof, in particular natural rubber,
- from 0 to 30% by weight of one or more other rubbers selected from butyl rubber, nitrile rubber, EPDM, neoprene, and mixture thereof,
based on the total weight of the rubber polymers.

According to an embodiment, the rubber polymers can consist in:
- from 20 to 90% by weight of optionally functionalized styrene-butadiene rubber(s) and
- from 10 to 80% by weight of one or more rubbers selected from polybutadiene rubber (BR), natural rubber (NR), polyisoprene rubber (IR) and mixtures thereof, in particular natural rubber,
based on the total weight of the rubber polymers.

According to an embodiment, the rubber polymer(s) can comprise:
- from 30 to 95% by weight, preferably from 40 to 90% by weight, more preferably from 45 to 85% by weight of optionally functionalized styrene-butadiene rubber (SBR);
- from 5 to 70% by weight, preferably from 10 to 60% by weight, more preferably from 15 to 55% by weight of natural rubber (NR),
based on the total weight of the rubber polymers.

According to an embodiment, the rubber polymer(s) can comprise:
- from 20 to 90% by weight, preferably from 30 to 80% by weight, more preferably from 40 to 70% by weight of optionally functionalized styrene-butadiene rubber (SBR);
- from 10 to 80% by weight, preferably from 20 to 70% by weight, more preferably from 30 to 60% by weight of polybutadiene rubber (BR),
based on the total weight of the rubber polymers.

According to an embodiment, the rubber polymer(s) can comprise:
- from 20 to 85% by weight, preferably from 30 to 75% by weight, more preferably from 40 to 65% by weight of optionally functionalized styrene-butadiene rubber (SBR);
- from 10 to 80% by weight, preferably from 20 to 70% by weight, more preferably from 30 to 60% by weight of polybutadiene rubber (BR),
- from 5 to 70% by weight, preferably from 10 to 50% by weight, more preferably from 15 to 30% by weight of natural rubber (NR),
based on the total weight of the rubber polymers.

According to an embodiment, the rubber polymer(s) can comprise:
- from 30 to 95% by weight, preferably from 40 to 90% by weight, more preferably from 45 to 85% by weight of styrene-butadiene rubber (SBR);
- from 5 to 70% by weight, preferably from 10 to 60% by weight, more preferably from 15 to 55% by weight of natural rubber (NR),
based on the total weight of the rubber polymers.

According to an embodiment, the rubber polymer(s) can comprise:
- from 20 to 90% by weight, preferably from 30 to 80% by weight, more preferably from 40 to 70% by weight of styrene-butadiene rubber (SBR);
- from 10 to 80% by weight, preferably from 20 to 70% by weight, more preferably from 30 to 60% by weight of polybutadiene rubber (BR),
based on the total weight of the rubber polymers.

According to an embodiment, the rubber polymer(s) can comprise:
- from 20 to 85% by weight, preferably from 30 to 75% by weight, more preferably from 40 to 65% by weight of styrene-butadiene rubber (SBR);
- from 10 to 80% by weight, preferably from 20 to 70% by weight, more preferably from 30 to 60% by weight of polybutadiene rubber (BR),
- from 5 to 70% by weight, preferably from 10 to 50% by weight, more preferably from 15 to 30% by weight of natural rubber (NR),
based on the total weight of the rubber polymers.

According to a particular embodiment, the rubber polymers can comprise less than 20% by weight of ethylene/propylene/diene polymer (EPDM), preferably less than 20%wt, more preferably less than 10%wt, even more preferably less than 5%wt, ideally less than 1%wt, of ethylene/propylene/diene polymer (EPDM), based on the total weight of the rubber polymers. According to an embodiment, the rubber polymers do not comprise EPDM.

According to a particular embodiment, the rubber polymers can comprise less than 20% by weight of neoprene (polychloroprene), preferably less than 20% by weight, more preferably less than 10% by weight, even more preferably less than 5% by weight, ideally less than 1% by weight, of neoprene, based on the total weight of the rubber polymers. According to an embodiment, the rubber polymers do not comprise neoprene.

The rubber polymer(s) used in the present invention may be commercially available. The rubber polymer can be in the form of a dry powder, in the form of granules, in the form of rubber bales, in the form of rubber bloc not oil-extended, or in the form of an oil extended rubber, preferably in the form of rubber bales. In particular, a functionalized styrene-butadiene rubber can be in the form of an oil extended rubber. Preferably, natural rubber can be in the form of rubber bales.

### Rubber composition

The rubber composition according to the invention comprises at least one rubber polymer, in particular as described previously, and at least date seed oil, in particular as described previously.

The rubber composition, in particular the natural rubber composition, in particular for tire tread compositions, can comprise from 1 to 80 PHR, in particular from 5 to 60 PHR, more particularly from 10 to 40 PHR, notably from 12 to 20 PHR of date seed oil, in particular as described previously.

The rubber composition, in particular the natural rubber composition, in particular for tire tread compositions, can comprise from 10 to 90% by weight, preferably from 25 to 75% by weight, more preferably from 45 to 65% by weight, for instance from 50 to 60% by weight of rubber polymer(s), in particular of natural rubber, based on the total weight of the rubber composition.

As mentioned previously, and as shown in the examples, date seed oil can act as plasticizer instead of usual plasticizers such as RAE plasticizers.

According to a particular embodiment, the rubber composition comprises less than 5% by weight, in particular less than 1% by weight, more particularly less than 0.1% by weight, of mineral oil and/or petroleum fraction, relative to the total weight of date seed oil, said rubber composition being preferably devoid of any mineral oil and/or any petroleum fraction.

In particular, the rubber composition comprises less than 5% by weight, in particular less than 1% by weight, more particularly less than 0.1% by weight, of petroleum-based oils, relative to the total weight of date seed oil. Among petroleum-based oils can be cited naphtenic oil and aromatic oil. In particular, aromatic oils have a content of aromatic compounds of between 30% and 95% by weight, a content of saturated compounds of between 1% and 20% by weight, and/or a content of resin-based compounds of between 1% and 10% by weight. Aromatic oils can comprise aromatic extracts of petroleum residues, obtained by extraction or dearomatization of residues from distillations of petroleum cuts. The different extracts are classified in different categories as a function of their process of production and can be DAE (Distillate Aromatic Extract) products, MES (Mild Extract Solvate) products, TDAE (Treated Distillate Aromatic Extract) products, RAE (Residual Aromatic Extract) products, TRAE (Treated Residual Aromatic Extract) products.

Preferably, said rubber composition is devoid of any petroleum-based oils.

According to a particular embodiment, the rubber composition comprises less that 0,1% by weight relative to its total weight, in particular is devoid, of DAE (Distillate Aromatic Extract) products, MES (Mild Extract Solvate) products, TDAE (Treated Distillate Aromatic Extract) products, RAE (Residual Aromatic Extract) products and/or TRAE (Treated Residual Aromatic Extract) products.

According to a preferred embodiment, the rubber composition comprises less than 1 PHR, in particular less than 0.5 PHR, more particularly less than 0.1 PHR, notably less than 0.01 PHR of auxiliary plasticizer(s) distinct from date seed oil, said rubber composition being preferably devoid of auxiliary plasticizer(s). Among auxiliary plasticizers can be mentioned petroleum-based plasticizers and some vegetable oils such as tall oil and derivatives thereof.

According to a particular embodiment, the rubber composition according to the invention comprises:
- from 10 to 90% by weight, in particular from 25 to 75% by weight, more particularly from 45 to 65% by weight of rubber polymer(s), in particular of natural rubber, based on the total weight of the rubber composition, and
- from 1 to 80 PHR, in particular from 5 to 60 PHR, more particularly from 10 to 40 PHR, notably from 12 to 20 PHR of date seed oil,
the rubber composition comprising less than 1 PHR, in particular less than 0.5 PHR, more particularly less than 0.1 PHR, notably less than 0.01 PHR of auxiliary plasticizer(s) distinct from date seed oil, said rubber composition being preferably devoid of auxiliary plasticizer(s).

According to a particular embodiment, the rubber composition according to the invention comprises:
- from 10 to 90% by weight, in particular from 25 to 75% by weight, more particularly from 45 to 65% by weight of rubber polymer(s), in particular of natural rubber, based on the total weight of the rubber composition, and
- from 1 to 80 PHR, in particular from 5 to 60 PHR, more particularly from 10 to 40 PHR, notably from 12 to 20 PHR of date seed oil,
the rubber composition comprising less than 10% by weight, in particular less than 5% by weight, in particular less than 1% by weight, more particularly less than 0.1% by weight, of mineral oil and/or petroleum fraction, relative to the total weight of date seed oil, said rubber composition being preferably devoid of any mineral oil and/or any petroleum fraction.

In particular, the rubber composition comprises less than 0,5% by weight of a phenol or a melamine resin, relative to the total weight of the rubber composition, notably is devoid of a phenol or a melamine resin. Such rubber compositions are specifically designed for tire and moreover for tire tread application.

In particular, the rubber composition comprises less than 1% by weight, in particular less than 0,1% by weight of water, relative to the total weight of the composition.

### Fillers

The rubber composition can further comprise fillers selected from carbon black, silica and mixtures thereof. In particular, the rubber composition can be based on a blend of one or more rubber polymer(s), generally in lump form, filled with a blend of silica and/or carbon black.

In particular the rubber composition can comprise from 20 to 90 PHR, preferably from 40 to 80 PHR, preferably from 50 to 70 PHR, preferably from 55 to 65 PHR, more preferably about 60 PHR of filler(s).

In particular, the rubber composition according to the invention may further comprise carbon black.

The carbon black may be a standard carbon black, for example grade N375, grade N220, grade N234, grade N134 carbon black or mixtures thereof, as determined according to ASTM D1765-18.

Preferably, if carbon black of grade N330, N326, N550 and/or N762 are present in the rubber composition of the invention, they are present in a combined (i.e. total) amount of less than 30 PHR, preferably less than 20 PHR, more preferably less than 10 PHR, even more preferably less than 5 PHR. The grade being determined according to ASTM D1765-18.

According to an embodiment, the rubber composition comprises from 5 to 80 PHR, preferably from 30 to 70 PHR, more preferably from 50 to 70 PHR of carbon black.

According to a particular embodiment, the rubber composition according to the invention comprises:
- from 10 to 90% by weight, in particular from 25 to 75% by weight, more particularly from 45 to 65% by weight of rubber polymer(s), in particular of natural rubber, based on the total weight of the rubber composition,
- from 1 to 80 PHR, in particular from 5 to 60 PHR, more particularly from 10 to 40 PHR, notably from 12 to 20 PHR of date seed oil, and
- from 5 to 80 PHR, preferably from 30 to 70 PHR, more preferably from 50 to 70 PHR of carbon black,
the rubber composition comprising less than 1 PHR, in particular less than 0.5 PHR, more particularly less than 0.1 PHR, notably less than 0.01 PHR of auxiliary plasticizer(s) distinct from date seed oil, said rubber composition being preferably devoid of auxiliary plasticizer(s).

### Additives

The rubber composition according to the invention may further comprise various additives.

It is understood that said additive(s) are compatible with their use in a rubber composition.

Said additive(s) are of course chosen with regard to the intended application of the rubber composition.

Of course, those skilled in the art will take care to choose the possible additives and/or the amount thereof in such a way that the advantageous properties of the rubber composition according to the invention, in particular the rheometric properties, Mooney viscosity, Payne effect, mechanical properties, etc., are not adversely affected by the proposed addition.

Such additives can be chosen from coupling agents, e.g. silane coupling agent, peptizer, zinc oxide, stearic acid, paraffin wax, antiozonant/antioxidant, accelerator, secondary accelerator, anti-scorching agent and crosslinker, e.g. sulphur crosslinker.

One example of silane coupling agent is Si-69 type. Examples of antiozonant/antioxidant are N-(1,3-dimethylbutyl)-N'-phenyl-1,4-phenylenediamine (6PPD) and 2,2,4-trimethyl-1,2-dihydro-quinoline (TDQ). Examples of accelerators are N-cyclohexyl-2-benzothiazolesulfenamide (CBS) and N-tertiarybutyl-2-benzothiazole sulfenamide (TBBS). One example of secondary accelerator is diphenylguanidine (DPG). One example of anti-scorching agent is pre vulcanization inhibitor (PVI). One example of peptizer is Peptizer Strucktol A86.

Preferably, the rubber composition comprises at least 0.1 PHR, in particular from 0.5 PHR to 5 PHR, more particularly from 1 to 3 PHR, notably from 1 to 2 PHR of sulfur crosslinker.

### Applications

The rubber composition of the invention can be used in tires including passenger cars tires (PSR or PCR) and truck/bus tires (TBR).

The rubber composition of the invention can be used in passenger cars tires and in particular in passenger cars tire treads.

Preferably, the rubber composition, notably comprising natural rubber, is used in truck tires and earthmover tires, in particular in truck tire treads and earthmover tire treads.

Tires and tire treads can be prepared according to well known method for the skilled person, starting from the rubber composition of the invention.

As mentioned previously, date seed oil, in particular as defined previously, can be used to plasticize at least one rubber polymer, in particular as described previously.

In particular, date seed oil is used to improve the viscoelastic properties of the rubber polymer.

In particular, date seed oil can be used to plasticize a rubber polymer selected from optionally functionalized styrene-butadiene rubber (SBR), polybutadiene rubber (BR), natural rubber (NR), polyisoprene rubber (IR), ethylene-propylene-diene monomer rubber (EPDM), polybutadiene (PB), nitrile butadiene rubber (NBR), polychloroprene rubber, butyl rubber, silicone rubber, and mixtures thereof, the rubber polymer preferably comprising at least natural rubber, in particular more that 50% by weight, more particularly more that 80% by weight, notably more that 95% by weight, for instance more that 98% by weight of natural rubber, relative to the total weight of the rubber polymer.

More particularly, date seed oil can be used alone to plasticize at least one rubber.

In particular, date seed oil can be used without a phenol or a melamine resin, in order to plasticize the rubber compositions specifically designed for tire and moreover for tire tread application.

As mentioned previously, date seed oil can be used without any petroleum-based oil, in particular without any mineral oil or any petroleum fraction.

In particular, date seed oil can be used as a fully bio-sourced plasticizer. In other words, date seed oil is a bio-sourced oil which can be used without any auxiliary plasticizer to plasticize a rubber polymer.

In particular, date seed oil can be used to plasticize at least one rubber polymer in order to prepare a rubber composition having an optimum cure time, according to the ASTM D5289 standard, of lower that 4 min, in particular from 3 to 4 min, more particularly from 3.4 to 3.8 min.

In particular, date seed oil can be used to plasticize at least one rubber polymer in order to prepare a rubber composition having a maximum torque from 1.13 Nm to 1.35 Nm and a minimum torque from 0.225 Nm to 0.4 Nm, the maximum torque and the minimum torque being measured according to the ASTM D5289 standard.

In a particular embodiment, date seed oil can be used to plasticize at least one rubber polymer in order to prepare a rubber composition having a Mooney viscosity ML(1+4) at 100°C from 60 to 70 Mooney Units and a Mooney Scorch time from 6 to 8 min, the Mooney viscosity and the Mooney Scorch time being measured according to the ASTM D1646 standard.

In another particular embodiment, date seed oil can be used to plasticize at least one rubber polymer in order to prepare a rubber composition having a Payne effect from 30 kPa to 900 kPa, the Payne effect being the difference between the maximum storage modulus at a strain of 0.25% and the minimum storage modulus at a strain of 280.0%.

In particular, date seed oil can be used to plasticize at least one rubber polymer in order to prepare a vulcanized rubber having a hardness according to ASTM D2240 standard from a Shore A value of 53 to 65, a tensile strength according to ASTM D412 standard from 170 to 255 kg/m², in particular from 220 to 255 kg/cm², and/or a modulus at 200% strain according to ASTM D412 standard from 30 to 40 kg/cm².

In a particular embodiment, date seed oil can be used to plasticize at least one rubber polymer in order to prepare a rubber composition having a value of Tan δ at 0°C from 0.13 to 1.15, at 25°C from 0.14 to 0.15 and at 60°C from 0.135 to 0.145, measured according to ASTM D5992 standard.

In particular, date seed oil can be used to disperse filler(s), in particular silica and/or carbon black, in a polymer rubber.

The invention will now be described by means of the examples and figures that follow, which are given as nonlimiting illustrations of the invention.

### Figures

Figure 1 represents the picture obtained by Scanning Electron Microscopy (X100 magnification) for the rubber composition CL1 prepared as described in example 1 according to the invention, comprising date seed oil, as presented in example 7.
Figure 2 represents the picture obtained by Scanning Electron Microscopy (X100 magnification) for the rubber composition CC1 prepared as described in example 1 outside of the invention, comprising an RAE plasticizer, as presented in example 7.
Figure 3 represents the picture obtained by Scanning Electron Microscopy (X100 magnification) for the rubber composition CC2 prepared as described in example 1 outside of the invention, comprising pitch tall oil as plasticizer, as presented in example 7.
Figure 4 represents the picture obtained by Scanning Electron Microscopy (X100 magnification) for the rubber composition CC3 prepared as described in example 1 outside of the invention, comprising a mix of pitch tall oil and T-DAE as plasticizer, as presented in example 7.

### Examples

### Example 1 - Preparation of a rubber composition according to the invention and of rubber compositions outside of the invention

A composition CL1, detailed in Table 2, is prepared according to the following steps:
- mix natural rubber with peptizer for 3 minutes;
- dump at 140°C;
- add zinc oxide and stearic acid and mix at 40 to 50 RPM for 3 minutes;
- dump at 140°C;
- Add 6PPD, TDQ, carbon black, date seed oil and wax, and mix at 40 to 50 RPM for 4 minutes;
- dump at 140°C;
- transfer the mix obtained on two roll mill and add TBBS, PVI and sulfur.

The date seed oil used in composition CL1 is a vegetable oil comprising oleic acid (42.6 wt%), lauric acid (16.2 wt%), palmitic acid (7.4 wt%), myristic acid (6.5 wt%), linoleic acid (12.7 wt%) and stearic acid (3.2 wt%). The properties of the date seed oil are summarized in Table 1. The date seed oil is devoid of carcinogens, has a content in polyaromatic hydrocarbons of less than 5 ppm, and is completely bio-sourced.

Three compositions CC1, CC2 and CC3 are prepared following the same steps, by replacing the date seed oil by:
- Plaxolene 50 (CC1), which is an RAE plasticizer commercialized by TotalEnergies, conventionally used as a plasticizer for Natural Rubber;
- a pitch tall oil (CC2);
- a mix of 70% by weight of Plaxolene TD346 and 30% by weight of a pitch tall oil (CC3), wherein Plaxolene TD346 is a T-DAE plasticizer.

The properties of these three plasticizers used in the comparative examples are provided in Table 1.

**Table 1**

| **Properties** | **Method** | **Unit** | **Date seed oil** | **Plaxolene 50** | **Pitch tall oil** | **Pitch tall oil/ Plaxolene TD346 70/30** |
|---|---|---|---|---|---|---|
| **Appearance** | Visual | - | Faint Straw | Brown Viscous Liquid | Brown Viscous Liquid | Dark brown Viscous liquid |
| **Density at 15°C** | ASTM D4052 | kg/m³ | 921 | 977.0 | 995.05 | 954.2 |
| **Cleveland Open Cup Flash Point** | ASTM D92 | °C | 312 | 310 | 306 | 268 |
| **Aniline Point** | ASTMD 611 | °C | 25 to 35 | 69.2 | <30 | - |
| **Pour Point** | ASTM D97 | °C | 9 | 12 | -12 | 12 |
| **Kinematic Viscosity at 40°C** | ASTM D445 | mm²/s | 35.188 | - | - | - |
| **Kinematic Viscosity at 100°C** | ASTM D445 | mm²/s | 7.6482 | 67.0 | 91.18 | 34.84 |
| **Refractive Index at 20°C** | ASTM D1218 | - | 1.46602 | 1.5483 | 1.51828 | 1.52633 |
| **Initial Boiling Point** | IP 480 | °C | 396 | 405.1 | 375 | 359 |
| **Final Boiling Point** | IP 480 | °C | 637 | 714.6 | 729.9 | 720.5 |
| **Biodegradability at 28 days** | OECD 301B | - | 58.13% | - | - | - |

From Table 1, it can be seen that the density, flash point and pour point of the date seed oil are very similar to RAE based plasticizer. The date seed oil has a much lower viscosity, which makes it easy for transportation, and a lower Aniline Point denoting higher solvency than RAE based plasticizer.

The compositions CL1, CC1, CC2 and CC3 are given in Table 2 below.

The ingredients shown in Table 2 are standard grades for the rubber industry, i.e. Peptizer Strucktol A86, zinc oxide, stearic acid, antiozonant/antioxidant N-(1,3-dimethylbutyl)-N' -pheny-1,4-phenylenediamine (6PPD), 2,2,4-trimethyl-1,2-dihydroquinoline (TDQ), carbon black, paraffin wax, N-Tertiarybutyl-2-benzothiazole sulfenamide (TBBS), a pre vulcanization inhibitor (PVI) and sulfur crosslinker.

**Table 2**

| **Compounding Ingredient** | **CL1 (PHR)** | **CC1 (PHR)** | **CC2 (PHR)** | **CC3 (PHR)** |
|---|---|---|---|---|
| **Natural Rubber** | 100 | 100 | 100 | 100 |
| **Peptizer Strucktol A86** | 0.2 | 0.2 | 0.2 | 0.2 |
| **Zinc Oxide** | 5 | 5 | 5 | 5 |
| **Stearic acid** | 2 | 2 | 2 | 2 |
| **6PPD** | 2.5 | 2.5 | 2.5 | 2.5 |
| **TDQ** | 1.5 | 1.5 | 1.5 | 1.5 |
| **Carbon Black** | 60 | 60 | 60 | 60 |
| **PLAXOLENE 50** | 0 | 12 | 0 | 0 |
| **DATE SEED OIL** | 12 | 0 | 0 | 0 |
| **Pitch tall oil** | 0 | 0 | 12 | 0 |
| **PLAXOLENE TD346 + Pitch tall oil** | 0 | 0 | 0 | 12 |
| **Wax** | 1 | 1 | 1 | 1 |
| **TBBS** | 1.5 | 1.5 | 1.5 | 1.5 |
| **PVI** | 0.1 | 0.1 | 0.1 | 0.1 |
| **Sulfur** | 1.5 | 1.5 | 1.5 | 1.5 |

### Example 2 - Characterization of the rheometric properties of the compositions of example 1

The rheometric properties are measured with a Montech Rheometer (MDR-3000) at 160°C according to the ASTM D5289 standard directly after the preparation of the compositions as described in example 1. The rheometric properties are summarized in Table 3. They give mainly indication about the processability of the rubber composition.

**Table 3**

| | **Maximum Torque (Nm)** | **Minimum Torque (Nm)** | **Induction time (min)** | **Scorch time (min)** | **Optimum Cure time (min)** |
|---|---|---|---|---|---|
| **CL1** | 1.24 | 0.29 | 1.0 | 1.3 | 3.6 |
| **CC1** | 1.3 | 0.28 | 1.1 | 1.4 | 4.1 |
| **CC2** | 1.34 | 0.25 | 1.1 | 1.4 | 4.6 |
| **CC3** | 1.41 | 0.30 | 1.1 | 1.3 | 4.2 |

The rheometric properties of the composition CL1 according to the invention are similar to the ones of the comparative compositions CC1, CC2 and CC3. Hence, date seed oil is a good alternative for the RAE plasticizer as used in composition CC1 for compounding of Natural Rubber.

Besides, the shortest cure time is observed for the composition CL1 according to the invention. Composition CL1, comprising date seed oil, thus enables a faster process, which is beneficial.

### Example 3 - Characterization of the Mooney viscosity of the compositions of example 1

The Mooney viscosity test is used to measure the viscosity of raw rubbers and to characterize the quality of both natural and synthetic rubber. The Mooney viscosity is measured by using a Prescott Mooney Viscometer at 100°C (protocol ML(1+4) at 100°C).

The Mooney scorch time (t5) is defined as the time required for an increase of five units above the minimum viscosity and determined from a plot of the Mooney viscosity versus time. The Mooney scorch time is determined by using Prescott Mooney Viscometer at 125°C.

The testing procedures for measuring the Mooney viscosity and the Mooney scorch time are conducted according to the method described in ASTM D1646.

The results are summarized in Table 4.

**Table 4**

| **Sample code** | **Mooney Viscosity** | **Mooney Scorch time (min)** |
|---|---|---|
| **CL1** | 65 | 7 |
| **CC1** | 66 | 7 |
| **CC2** | 55 | 8 |
| **CC3** | 70 | 7 |

It is shown that the Mooney Viscosity and Mooney Scorch time obtained using date seed oil is much similar to that obtained using other plasticizers.

### Example 4 - Characterization of the Payne Effect of the compositions of example 1

The Payne effect characterizes the filler - filler and filler - polymer interaction. This test is carried on a Rubber Process Analyzer (RPA2000) at 100°C, at a frequency of 1.667 Hz, by applying a strain sweep from 0.28% to 280%.

The storage modulus (G') measured is provided in Table 5 at different strains and expressed in KPa.

**Table 5**

| **% Strain** | **CL1** | **CC1** | **CC2** | **CC3** |
|---|---|---|---|---|
| **0.25** | 852.93 | 1177.03 | 1506.53 | 1440.95 |
| **0.50** | 797.41 | 1071.08 | 1609.30 | 1198.61 |
| **0.80** | 755.21 | 1034.97 | 1251.24 | 1252.81 |
| **1.0** | 723.47 | 973.61 | 1032.83 | 1410.82 |
| **1.5** | 636.63 | 851.58 | 571.86 | 567.97 |
| **3.0** | 469.30 | 547.01 | 410.40 | 440.28 |
| **5.0** | 396.90 | 441.31 | 253.45 | 301.33 |
| **10.0** | 293.17 | 305.10 | 173.26 | 217.51 |
| **20.0** | 214.43 | 219.85 | 1506.53 | 1440.95 |
| **30.0** | 175.18 | 177.36 | 135.06 | 174.30 |
| **40.0** | 154.06 | 156.03 | 116.99 | 153.58 |
| **50.0** | 134.66 | 136.35 | 101.16 | 133.92 |
| **60.0** | 121.72 | 123.45 | 91.24 | 121.17 |
| **80.0** | 102.82 | 103.73 | 77.67 | 101.27 |
| **100.0** | 87.25 | 88.11 | 66.73 | 86.57 |
| **150.0** | 61.41 | 62.43 | 48.00 | 60.97 |
| **200.0** | 45.71 | 46.09 | 36.66 | 45.61 |
| **250.0** | 34.25 | 35.10 | 28.86 | 35.16 |
| **280.0** | 29.15 | 30.44 | 25.65 | 30.60 |

The Payne Effect is characterized by the difference ΔG' between the maximum storage modulus at a strain of 0.25% and the minimum storage modulus at a strain of 280.0%. The Payne effect (ΔG') obtained is provided in Table 6 and expressed in KPa.

**Table 6**

| | **CL1** | **CC1** | **CC2** | **CC3** |
|---|---|---|---|---|
| **Payne Effect ΔG'** | 823.8 | 1146.6 | 1481 | 1410 |

The data of Tables 5 and 6 show that the Payne Effect of composition CL1 according to the invention, comprising date seed oil as plasticizer, is lower than the Payne effect of compositions CC1, CC2 and CC3 comprising other plasticizers such as RAE based plasticizer or pitch tall oil based plasticizer.

A lower Payne Effect signifies:
- a reduced interaction between the filler aggregates, which leads to less filler-filler networking and/or
- more interaction (or bonding) between the fillers and the rubbers, and
- possibly a better filler dispersion.

A lower Payne Effect thus means less hysteresis and then lower Rolling Resistance of tire treads, and thus improvement in the Rolling Resistance region (Maghami S. et al., Rubber Chemistry and Technology, Vol. 85, No.4, pp.513-525, 2012).

Consequently, as the composition CL1 according to the invention shows a lower Payne Effects than the compositions CC1, CC2 and CC3 outside of the invention, composition CL1 comprising date seed oil as plasticizer results in less Rolling Resistance and hence improve the fuel economy.

### Example 5 - Characterization of the physical properties of the vulcanized rubbers obtained from the compositions of example 1

The compositions of example 1 are first molded into 2 mm thick sheet under high pressure at 160°C during 4 minutes for CL1 and during 5 minutes for CC1, CC2 and CC3 to obtain vulcanized rubber compounds or rubber slab. Then, dumbbell shaped rubber pieces were cut from that molded sheet for mechanical testing. These samples are then preconditioned at room temperature before further testing.

Some vulcanized rubbers are subjected to thermal ageing. Thermal ageing is performed according to ASTM D573 standard, wherein test pieces are exposed at 70°C in an air circulated oven for 7 days.

Samples are characterized without thermal ageing and after thermal ageing. All samples are tested at room temperature (25±2°C).

The mechanical properties of the vulcanized rubbers are measured as follow:
- The stress-strain properties, and thus the tensile strength, the elongation at break and the modulus, and the tear strength are measured on an Instron Universal Testing Machine, according to ASTM D412 and ASTM D624 standards respectively at a speed of 500 mm/min.
- The hardness of the composites is measured by the shore A Durometer according to ASTM D2240 standard.
- The Abrasion Resistance Index (ARI) test is measured on rotating drum abrasion tester (prolific make) according to IS-3400 (pt-3) standard. The test specimen (16 + 0.2 mm) was gripped in the specimen holder in such a manner that it project 2 + 0.2 mm beyond the face on grip.
- De-mattia cut initiation and cut growth test were done according to ASTM D430 and ASTM D813 standards respectively.
- Volume resistivity was carried out according to ASTM D257/IS-3396 standard.
- Specific gravity is measured according to ASTM D297 standard.

The properties measured as described previously on vulcanized rubbers are tabulated in Table 7.

**Table 7**

| | **Physical properties** | **CL1** | **CC1** | **CC2** | **CC3** |
|---|---|---|---|---|---|
| **1.** | **Before ageing** | | | | |
| **i)** | **Modulus at 50% strain (kg/cm²)** | 9 | 9 | 14 | 15 |
| **ii)** | **Modulus at 100% strain (kg/cm²)** | 14 | 14 | 23 | 24 |
| **iii)** | **Modulus at 200% strain (kg/cm²)** | 34 | 34 | 57 | 63 |
| **iv)** | **Modulus at 300% strain (kg/cm²)** | 69 | 70 | 106 | 132 |
| **v)** | **Tensile Strength (kg/cm²)** | 182 | 211 | 192 | 226 |
| **vi)** | **Elongation at break (%)** | 575 | 636 | 464 | 484 |
| **vii)** | **Hardness (Shore A)** | 56 | 58 | 66 | 65 |
| **viii)** | **Tear Strength (kg/cm)** | 81 | 84 | -- | -- |
| **2.** | **After ageing at 70°C for 7 days** | | | | |
| **i)** | **Modulus at 100% strain (kg/cm²)*** | 17(+21) | 23 (+64) | 35 (+52) | 39 (+62) |
| **ii)** | **Tensile Strength (kg/cm²)*** | 229(+26) | 246(+17) | 211 (+10) | 226 (0) |
| **iii)** | **Elongation at break (%)*** | 590(+3) | 575(-10) | 426 (-8) | 393 (-18) |
| **iv)** | **Hardness (Shore A) **** | 65(+9) | 64(+6) | 73 (+7) | 72 (+7) |
| **v)** | **Tear Strength (kg/cm)***** | 141(+74) | 134(+60) | -- | -- |
| **3.** | **Abrasion Resistance Index** | 72 | 71 | 114 | 130 |
| **4.** | **De-Mattia cut initiation (No. of KCs)** | 55 | 51 | 19 | 29.5 |
| **5.** | **De-Mattia cut growth up to 12mm (No. of KCs)** | 140 | 150 | 136 | 172 |
| **6.** | **Specific gravity** | 1.12 | 1.13 | 1.13 | 1.12 |

| | | | | | |
|---|---|---|---|---|---|
| * *Values in bracket represents the variation between the properties before and after ageing, in* % ** *Values in bracket represents the variation between the properties before and after ageing, in points* *** *Values in bracket represents the variation between the properties before and after ageing, in* %. *After tearing, dumbbell gets elongated like tensile sample. In other words, the samples will have more flexibility.* | | | | | |

As it appears in Table 7, the modulus at 50%, 100%, 200% and 300% before ageing are almost similar for compositions CL1 and CC1.

For composition CL1, the values of tensile strength, hardness, elongation at break and tear strength are lower than the values for composition CC1. The lower value of hardness signifies that date seed oil provides a better plasticization involving surface and a better bulk plasticization compared to RAE based plasticizer (Ezzodin S. et al., Iranian Polymer Journal, 22: 697-707, 2013). The decrease in tensile strength values can also be attributed to the higher plasticization effect of date seed oil compared to RAE based plasticizer (Ezzodin S. et al., Iranian Polymer Journal, 22: 697-707, 2013). A better plasticization of date seed oil means also a higher compatibility of date seed oil with rubber compared to RAE based plasticizer. After ageing, composition CL1 performs also better than composition CC1.

Abrasion resistance of composition CL1 is also found to be similar to the abrasion resistance of composition CC1. The Cut initiation and cut growth values are similar for both compositions CL1 according to the invention and CC1 outside of the invention.

Thus, it can be concluded from the physical properties reported in Table 7 that date seed oil serves as a better plasticizer for the compounding of rubbers in comparison to conventional RAE plasticizer.

### Example 6 - Dynamic properties of the vulcanized rubbers obtained from the compositions of example 1

With "dynamic properties", it is intended the viscoelastic properties of a rubber composition.

The dynamic properties of the vulcanized rubbers, obtained as detailed in example 5 from the compositions of example 1, are measured at 0°C, 25°C and at 60°C according to ASTM D5992 standard, by using a Dynamic Mechanical Analyzer (DMA), within a temperature range of 0°C, 25°C and 60°C, at a static strain of 0.5%, a dynamic strain of 0.1% and a frequency of 5 Hz. The sample is subjected to a controlled static strain and then subjected to 0.1% dynamic strain.

The elastic modulus (E'), the loss modulus (E") and tan δ (representing the ratio E'/E") can be extracted from the DMA curve.

The values of Tan δ measured are given in Table 8.

**Table 8**

| **Properties** | **CL1** | **CC1** | **CC2** | **CC3** |
|---|---|---|---|---|
| **Tan δ at 0°C** | 0.1446 | 0.1359 | 0.1215 | 0.1189 |
| **Tan δ at 25°C** | 0.1450 | 0.1417 | 0.1305 | 0.1187 |
| **Tan δ at 60°C** | 0.1422 | 0.1490 | 0.1378 | 0.1213 |

Tan δ values at 0°C and 25°C indicate wet and dry grip respectively. The higher the value of tan δ, the better is the grip and therefore the safer is the moving of the tire on the road (Zafarmehrabian R. et al., E J Chem, 9: 1102-1112, 2012 and Karrabi M et al., Iran Polym J, 20:15-27, 2011). For composition CL1 according to the invention, tan δ at 0°C and 25°C is higher than the case of the comparative compositions CC1, CC2 and CC3, indicating a better wet and dry grip by using date seed oil as plasticizer.

Tan δ at high temperature (60°C) indicates tread rolling resistance. The lower the value of tan δ at high temperature, the lower is the rolling resistance and therefore the lower is the tire fuel consumption (Kuta A. et al., K GK 63:120-122, 2010, Soltani S. et al., Iran Polym J, 14:745-751, 2005 and Sarwaki et al., Polymers & Polymers Composites, Vol. 24, No. 9, 2016). Tan δ at 60°C is lower for the composition CL1 according to the invention compared to the composition CC1 outside the invention, signifying that the use of date seed oil as plasticizer instead of RAE based plasticizer provides a rubber with less rolling resistance and hence better fuel economy.

### Example 7 - Dispersion of fillers in the compositions of example 1

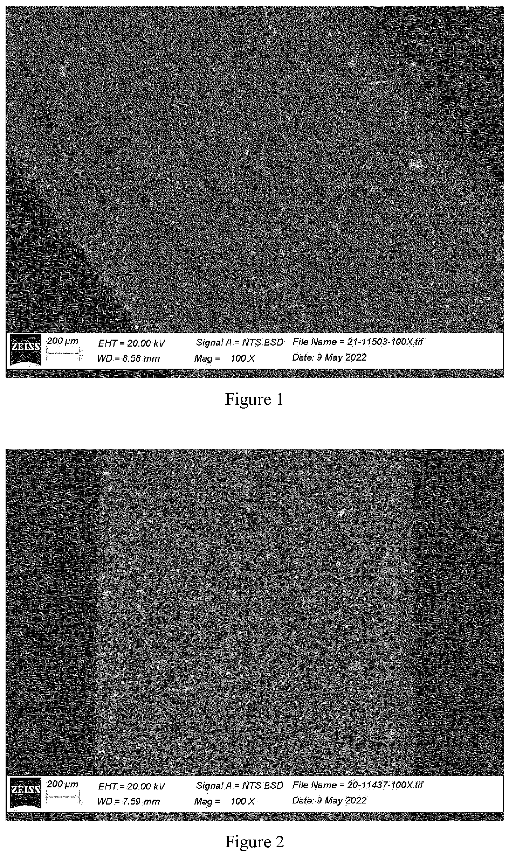

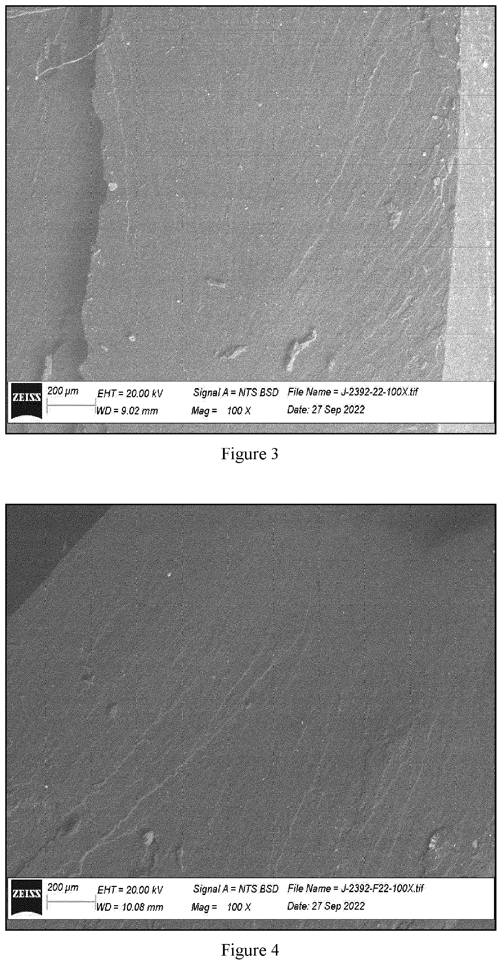

The dispersion of fillers is characterized by visual dispersion rating which is given on the scale of 1 to 10 according to ISO standard ISO 11345. A rating of 10 indicates a state of dispersion representing near-optimum physical properties while a rating of 1 indicates the presence of structural flaws, resulting in inferior physical properties. Normally, the visual dispersion ratings indicate the following level of compound quality. This test is carried by Scanning Electron Microscopy (SEM) at a magnification of X100. The sample is prepared by cutting thin section from vulcanized rubber and placed under SEM. Observed images were compared with a series of standard references. SEM images are shown below for composition CL1 (figure 1), CC1 (figure 2), CC2 (figure 3) and CC3 (figure 4).

From the images, it can be deduced a visual dispersion rating from 8 to 9 which means that the dispersion of fillers within the rubber matrix is very good for the composition CL1 according to the invention as well as for compositions CC1, CC2 and CC3 outside the invention. Thus, a similar performance for the dispersion of fillers is obtained for date seed oil and for the other plasticizers evaluated, for instance RAE based plasticizer.

## Claims

1. Rubber composition for tire applications comprising:
- at least one rubber polymer, and
- at least date seed oil.

2. Rubber composition according to the preceding claim, said at least date seed oil being a bio-sourced plasticizer oil, preferably a fully bio-sourced plasticizer oil, and being inherently biodegradable.

3. Rubber composition according to claim 1 or 2, comprising less than 1 PHR, in particular less than 0.5 PHR, more particularly less than 0.1 PHR, notably less than 0.01 PHR of auxiliary plasticizer(s) distinct from date seed oil, said rubber composition being preferably devoid of auxiliary plasticizer(s).

4. Rubber composition according to anyone of the preceding claims, the date seed oil comprising, relative to the total weight of the fatty acids in said date seed oil:
- from 26.3% to 52.2% by weight, preferably from 40% to 50% by weight, more preferably from 41.3% to 47.7% by weight, even more preferably from 42% to 45% by weight, and preferably 42.6% by weight, of oleic acid,
- from 5.8% to 34.2% by weight, preferably from 10% to 20% by weight, more preferably from 10.2% to 17.8% by weight, even more preferably from 12% to 17% by weight, and preferably 16.2% by weight, of lauric acid,
- from 7.0% to 15.1% by weight, preferably from 7.0% to 9.8% by weight, more preferably from 7% to 8% by weight, even more preferably 7.4% by weight, of palmitic acid,
- from 3.1% to 15.7% by weight, preferably from 5% to 10% by weight, more preferably from 6.5% to 11.0% by weight, even more preferably 6.5% by weight, of myristic acid,
- from 0.3% to 21.0% by weight, preferably from 9.2% to 19.2% by weight, more preferably from 10% to 15% by weight, even more preferably 12.7% by weight, of linoleic acid, and/or
- from 1.7% to 5.7% by weight, preferably from 2.8% to 3.9% by weight, more preferably from 3% to 3.5% by weight, even more preferably 3.2% by weight, of stearic acid.

5. Rubber composition according to anyone of the preceding claims, said date seed oil having a flash point from 140°C to 300°C, in particular from 250°C to 320°C, more particularly from 280°C to 315°C, and is preferably 312°C.

6. Rubber composition according to anyone of the preceding claims, said date seed oil having a kinematic viscosity at 40°C from 25 mm²/s to 41.6 mm²/s, preferably from 30 mm²/s to 40 mm²/s.

7. Rubber composition according to anyone of the preceding claims, wherein the rubber polymer is selected from optionally functionalized styrene-butadiene rubber (SBR), polybutadiene rubber (BR), natural rubber (NR), polyisoprene rubber (IR), ethylene-propylene-diene monomer rubber (EPDM), polybutadiene (PB), nitrile butadiene rubber (NBR), polychloroprene rubber, butyl rubber, silicone rubber, and mixtures thereof, in particular from optionally functionalized styrene-butadiene rubber (SBR), natural rubber (NR) and mixtures thereof, preferably the rubber polymer comprises at least natural rubber, in particular more that 50% by weight, more particularly more that 80% by weight, notably more that 95% by weight of natural rubber, relative to the total weight of the rubber polymer, for instance consists of natural rubber.

8. Rubber composition according to anyone of the preceding claims, comprising from 10 to 90% by weight, preferably from 25 to 75% by weight, more preferably from 45 to 65% by weight of rubber polymer(s), in particular of natural rubber, based on the total weight of the rubber composition.

9. Rubber composition according to anyone of the preceding claims, comprising from 1 to 80 PHR, in particular from 5 to 60 PHR, more particularly from 10 to 40 PHR, notably from 12 to 20 PHR of date seed oil.

10. Rubber composition according to anyone of the preceding claims, further comprising from 5 to 80 PHR, preferably from 30 to 70 PHR, more preferably from 50 to 70 PHR of carbon black.

11. Use of date seed oil, in particular as defined in any of claims 2 and 4 to 6, to plasticize at least one rubber polymer.

12. Use according to the preceding claim, the rubber polymer being selected from optionally functionalized styrene-butadiene rubber (SBR), polybutadiene rubber (BR), natural rubber (NR), polyisoprene rubber (IR), ethylene-propylene-diene monomer rubber (EPDM), polybutadiene (PB), nitrile butadiene rubber (NBR), polychloroprene rubber, butyl rubber, silicone rubber, and mixtures thereof, the rubber polymer preferably comprising at least natural rubber, in particular more that 50% by weight, more particularly more that 80% by weight, notably more that 95% by weight of natural rubber, relative to the total weight of the rubber polymer, notably the rubber polymer consisting of natural rubber.

13. Use of the rubber composition according to anyone of claims 1 to 10 for tire applications.

14. Tire tread comprising the rubber composition according to anyone of claims 1 to 10.

15. Tire comprising a tire tread according to the preceding claim.
